# EUROPEAN PATENT APPLICATION

(11) **EP 2 082 988 A1**
(43) Date of publication of application: **29.07.2009**
(21) Application number: 09150857.2
(22) Date of filing: 19.01.2009
(51) Int. Cl.: B68B 1/06

(54) **Horse bit**

(30) Priority: 25.01.2008 KR 20080008154
(71) Applicant: Samkyung Trading Corporation, Gangnam-gu Seoul (KR)
(72) Inventor: Kim, Hyun Gu, Seoul (KR)
(74) Representative: Intes, Didier Gérard André

(57) **Abstract**

The present invention discloses a horse bit (1) comprising a joint member (5) for rotatably jointing a pair of bars (3, 4) while eliminating or minimizing any possible gaps between the jointed portions during the relative rotation of the bars (3, 4), to thereby avoid damaging the sensitive parts of the horse's mouth, especially the horse's tongue.

## Description

### Technical Field

The present invention relates to a horse bit. More particularly, the present invention relates to a horse bit comprising a joint member for rotatably jointing a pair of bars (also referred to as mouthpieces) while eliminating or minimizing any possible gaps between the jointed portions during the relative rotation of the bars, to thereby avoid that the sensitive parts of the horse's mouth, especially the horse's tongue are pinched in the gap and thus damaged as a result.

### Background of the invention

A horse bit is conventionally in the form of an elongate bar for putting it in the horse's mouth to control a heavyset horse. In general, the horse bit comprises a pair of bars made of rigid material and each bar has an eyelet at one end and a cheek for securing reins at the other end. The eyelets are joined to each other by any commonly known means so that the pair of bars forms the elongate bar for a mouthpiece. The horse bit should be precisely situated in the horse's mouth, especially between the upper and lower teeth or on the flat of the tongue.

As the horse often perceives the horse bit as a foreign substance and tries to push it out by means of his tongue, it may be happened that the horse's tongue is pinched in any open space or gap created by the jointed eyelets or any other conventional joint member, whereby it causes the damage to the sensitive parts of the horse's mouth such as the horse's tongue.

### Summary of The Invention

It is an object of the present invention to provide an improved horse bit comprising a joint member for rotatably jointing a pair of bars while eliminating or minimizing the creation of any possible gaps between the jointed portions by the radial swing motion which may be produced during the relative rotation of the bars.

The foregoing object is accomplished in the present invention by providing a horse bit comprising a pair of bars rotatably jointed to each other by a joint member, characterized in that each of the bars is provided with the bar extension extending in a longitudinal direction of the bars from the one end of the bars, wherein the bar extensions each are thinner than the bars; the joint member is provided with a first joint element and a second joint element and a pair of fixing rings, wherein each of the first and second joint elements is provided with a first bore and a second bore extending in an axial direction of the joint elements and communicating with each other, and the bar extensions each are inserted into the second bore through the first bore, and the pair of fixing rings each are inserted into the second bore to be joined to the bar extension within the second bore; and the first joint element with the first bar joined thereto and the second joint element with the second bar joined thereto are jointed each other at the other ends of the joint elements with the other ends being contacted closely.

According to one embodiment of the present invention, the first joint element and the second joint element are joined together by welding, but any other known techniques can also be used instead of welding.

It is preferable that an outer diameter of the one ends of the bars substantially corresponds to an outer diameter of the opposed ends of the first and second joint elements, to eliminate or minimize an angled portion in the jointed portions between the bars and the joint elements.

It is preferable that the outer diameter of the bar extensions substantially corresponds to an inner diameter of the first bore in the first and second joint element. It is also preferable that an outer diameter of the bar extensions substantially corresponds to an inner diameter of the fixing rings. These can ensure that the bar extension is tightly inserted into the first bore of the joint elements and into the fixing ring in order to minimize the radial swing motion which may be produced during the relative rotation of the bars.

In one embodiment of the present invention, the outer diameter of the fixing rings substantially corresponds to an inner diameter of the second bore in the first and second joint element. This configuration can also ensure that the fixing ring is tightly inserted into the second bore in the joint elements.

In addition, the first and second joint element may have the outer diameter which gradually increases from the inserting side of the bar extensions such that the resultant joint member forms an elliptical shape in the cross section. The elliptical shape of the joint member has no angled portions and thus can minimize the discomfort that the horse may feel due to the angled portion.

Each of the bars may be provided with a cheek at the other end.

### Brief Description of the Drawings

The present invention will be described in more detail with reference to the accompanying drawings, in which:
Fig. 1 is a plane view of a horse bit according to the present invention;
Fig. 2 is a sectional view taken along the line II-II of Fig. 1;
Fig. 3 is an exploded view illustrating the assembly of the embodiment of Fig. 2;

### Detailed Description of The Preferred Embodiments

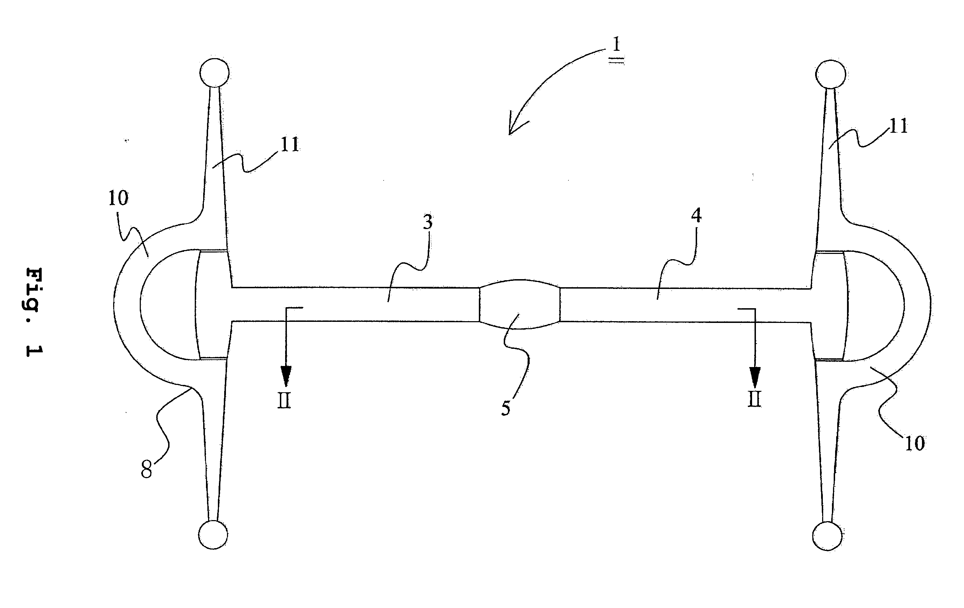

Fig. 1 is a plane view of a horse bit according to the present invention.

Referring to Fig. 1, the horse bit 1 according to the present invention comprises a pair of bars 3, 4 rotatably joined to each other by a joint member 5. To one end of a first bar 3 and a second bar 4, a cheek 8 is attached, respectively. Although full cheeks with two arms 11 extending upward and downward from a ring 10 are shown in Fig. 1, other types of cheeks may be used, for example, half cheek, loose ring and so on.

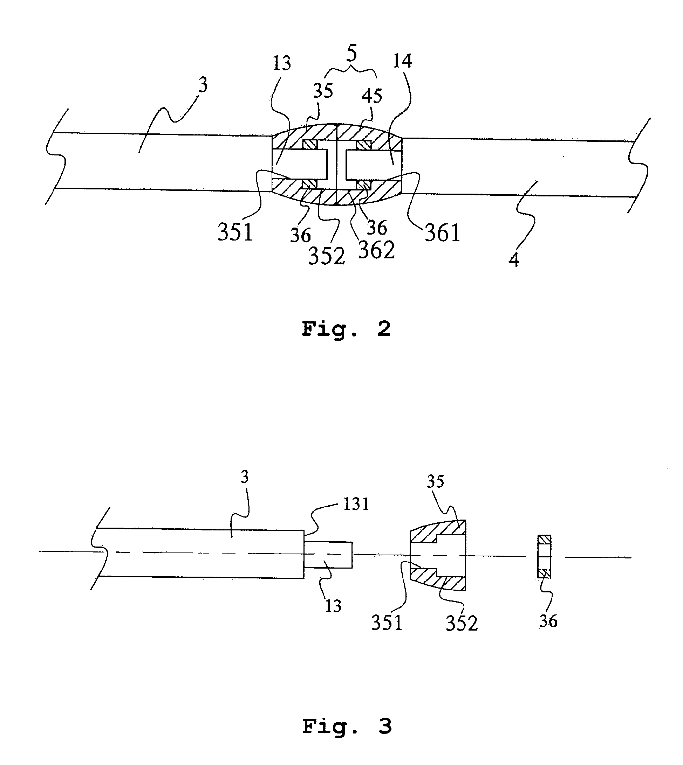

Fig.2 is a sectional view taken along the line II-II of Fig. 1 and Fig. 3 is an exploded view illustrating the assembly of a joint member of Fig. 2.

Referring to Fig. 2 and fig. 3, each of the first and second bars 3, 4 is provided with bar extension 13, 14 which extends in a longitudinal direction of the bars 3, 4 from the one end of the bars 3, 4, respectively. As shown in Fig. 2, the bar extensions 13, 14 are thinner than the bars 3, 4.

The joint member 5 comprises a first joint element 35, a second joint element 45 and a pair of fixing rings 36. The first and second joint elements 35, 45 are joined together by any jointing means such as welding to form a joint member 5. Each of the first and second joint elements 35, 45 comprises a first bore 351, 361 and a second bore 352, 362 extending in a longitudinal direction of the elements 35, 45 and communicating with each other, wherein the central axes of the first bore 351, 361 and the second bore 352, 362 coincide with each other. A pair of fixing rings 35, 36 is seated in the second bore 352, 362 of the joint elements 35, 45, respectively. Into the first bore 351, 361 of the joint elements 35, 45, the bar extensions 13, 14 are inserted. The bar extensions 13, 14 are inserted into the second bore 352, 362 through the first bore 351, 361 and they are further inserted into the fixing ring 36 within the second bore 352, 362 to be joined with the fixing ring 36, for example by welding.

It is preferable that an outer diameter of the one end of the bars 3, 4 from which the bar extensions extend substantially corresponds to an outer diameter of the opposed end of the joint elements 35, 45, so as to eliminate the angled portions which will cause the discomfort to the horse. The bar extensions 13, 14 are substantially cylindrical and thinner than the bars 3, 4. It is also preferable that an outer diameter of the bar extensions 13, 14 corresponds to an inner diameter of the fixing rings 36 and to an inner diameter of the first bore 351, 361 of the joint elements 35, 45, to prevent the creation of the gap between the one end of the bars 3, 4 and the abutted one end of the joint elements 35, 45 by a radial swing motion of the bars 3, 4 that may be occurred when the bars 3, 4 rotate around its axis. The length of the bar extensions 13, 14 are configured to be longer than that of the first bore 351, 361 of the joint elements 35, 45 so that the bar extensions 13, 14 are joined with the fixing rings 36 within the second bore 352, 362 by welding or any other jointing techniques.

In addition, It is preferable that an outer diameter of the fixing rings 36 corresponds to an inner diameter of the second bore 352, 362 of the joint elements 35, 45, to also prevent the creation of the gap between the one end of the bars 3, 4 and the abutted one end of the joint elements 35, 45 by a radial swing motion of the bars 3, 4 that may be produced when the bars 3, 4 rotate around its axis.

The first and second joint elements 35, 45 each have an outer diameter gradually increasing from the side into which the bar extensions 13, 14 are inserted, so that the joint member 5, which are formed by jointing the joint elements 35, 45 together, preferably has a substantially elliptical cross section. This enables it to eliminate the angled portions that the horse tends to feel discomfort.

Now, referring to Fig. 3, assembling the joint member and the bars 3, 4 will be described below. In this description, assembling the second joint element 45 and the bar 4 will be omitted since the joint elements 35, 45 are symmetrical and perform the same function, as shown in Fig. 3.

First, the bar extension 13 is inserted into the first joint element 35. The bar extension 13 is further inserted into the second bore 352 through the first bore 351 because the length of the bar extension 13 is configured to be longer than that of the first bore 351.

Then, the fixing ring 36 is inserted into the second bore 352 of the first joint element 35, with the one end 131 of the bars 3, 4 and the opposed end of the first joint element 35 being contacted each other in order to reduce the gap between them.

Thereafter, the fixing ring 36 and the bar extension 13 are joined by the known jointing technique such as welding. As a result, the first bar 3 is freely rotatable with respect to the first joint element 35 while the radial swing motion of the first bar 3 during the rotation can be eliminated or effectively minimized, since the outer diameter of the bar extension 13 substantially corresponds to the inner diameters of the first bore 351 and the fixing ring 36, and the one end 131 of the bar 3 and the opposed one end of the first joint element 35 are contacted each other without the presence of any gaps between them, as shown in Fig. 2.

Similarly, the second joint element 45 and the second bar 4 are joined together.

Finally, the first joint element 35 with the first bar 3 joined thereto and the second joint element 45 with the second bar 4 joined thereto are jointed each other at the ends of the joint elements 35, 45 for example by welding, with the ends of the joint elements 35, 45 being contacted closely.

According to the horse bit of the present invention, the bars 3, 4 are freely rotatable around the longitudinal axis relative to one another while eliminating or minimizing the creation of any possible gaps between the jointed portions by the radial swing motion which may be produced during the relative rotation of the bars, to thereby avoid that the sensitive parts of the horse's mouth, especially the horse's tongue are pinched in the gap and thus damaged as a result.

The invention has been described in terms of preferred embodiments. However, it should be understood that the hose bit of this invention is not limited in its application to the specific embodiments and those skilled in the art will recognize that various modifications and variations may be made without departing from the spirit and scope of this invention, as defined in the following claims.

## Claims

1. A horse bit (1) comprising a pair of bars (3, 4) rotatably joined to each other by a joint member (5),
**characterized in that** each of the bars (3, 4) is provided with the bar extension (13, 14) extending in a longitudinal direction of the bars (3, 4) from the one end (131) of the bars (3, 4), wherein the bar extensions (13, 14) each are thinner than the bars (3, 4);
the joint member (5) is provided with a first joint element (35) and a second joint element (45) and a pair of fixing rings (36), wherein each of the first and second joint elements (35, 45) is provided with a first bore (351, 361) and a second bore (352, 362) extending in an axial direction of the joint elements (35, 45) and communicating with each other, and the bar extensions (13, 14) each are inserted into the second bore (352, 362) through the first bore (351, 361), and the pair of fixing rings (36) each are inserted into the second bore (352, 362) to be joined to the bar extension (13, 14) within the second bore (352, 362); and
the first joint element (35) with the first bar (3) joined thereto and the second joint element (45) with the second bar (4) joined thereto are jointed each other at the other ends of the elements (35, 45) with the other ends being contacted closely.

2. The horse bit (1) according to claim 1, wherein the first joint element (35) and the second joint element (45) are joined together by welding.

3. The horse bit (1) according to claim 1 or claim 2, wherein an outer diameter of the one ends (131) of the bars (3, 4) substantially corresponds to an outer diameter of the opposed ends of the first and second joint elements (35, 45).

4. The horse bit (1) according to any one of claims 1-3, wherein an outer diameter of the bar extensions (13, 14) substantially corresponds to an inner diameter of the fixing rings (36).

5. The horse bit (1) according to any one of the preceding claims, wherein the first and second joint element (35, 45) has the outer diameter which gradually increases from the inserting side of the bar extensions (13, 14) such that the joint member (5) forms a substantially elliptical shape in the cross section.

6. The horse bit (1) according to any one of the preceding claims, wherein the outer diameter of the bar extensions (13, 14) substantially corresponds to an inner diameter of the first bore (351, 361) in the first and second joint element (35, 45).

7. The horse bit (1) according to any one of the preceding claims, wherein the outer diameter of the fixing rings (36) substantially corresponds to an inner diameter of the second bore (352, 362) in the first and second joint element (35, 45).

8. The horse bit (1) according to any one of the preceding claims, wherein the bars (3, 4) each are provided with a cheek (8) at the other ends.
